# EUROPÄISCHE PATENTANMELDUNG

(11) **EP 1 361 636 A1**
(43) Veröffentlichungstag der Anmeldung: **12.11.2003**
(21) Anmeldenummer: 03006340.8
(22) Anmeldetag: 20.03.2003
(51) Int. Cl.: H02G 11/02

(54) **Schutzschalter für eine Kabeltrommel**

(30) Priorität: 10.05.2002 DE 10220693
(71) Anmelder: Hugo Brennenstuhl GmbH & Co. KG, 72074 Tübingen (DE)
(72) Erfinder: Brennenstuhl, Hugo, 72074 Tübingen (DE)
(74) Vertreter: Vetter, Hans, Dipl.-Phys.Dr.

(57) **Zusammenfassung**

Schutzschalter zur Unterbrechung eines über eine elektrische Leitung (19) fließenden Stroms, insbesondere bei einer Kabeltrommel für eine aufwickelbare elektrische Verlängerungsleitung, mit einem Thermoauslöser (13) zur Unterbrechung des Stroms, wenn aufgrund des durch die Leitung (19) fließenden Stroms ein Temperaturwert im Bereich des Thermoauslösers (13) überschritten wird, und mit einem Überstromauslöser zur Unterbrechung des Stroms, wenn der durch die Leitung (19) fließende Strom eine vorgegebene Abschaltstromstärke überschreitet, wobei der Überstromauslöser durch den Thermoauslöser (13) und ein Widerstandselement (11) gebildet ist, und das Widerstandselement (11) einen vorbestimmten Querschnitt und ein spezielles Material aufweist, so dass bei einer vorgegebenen Abschaltstromstärke eine Strom-Abschalttemperatur am Widerstandselement (11) anliegt, und das Widerstandselement (11) nahe beim Thermoauslöser (13) angeordnet ist, so dass der Thermoauslöser (13) aufgrund der Strom-Abschalttemperatur des Widerstandselements (11) bei der vorgegebenen Abschaltstromstärke den Strom auf der Leitung (19) unterbricht.

## Beschreibung

Die Erfindung betrifft einen Schutzschalter zur Unterbrechung eines über eine elektrische Leitung fließenden Stroms, insbesondere bei einer Kabeltrommel für eine aufwickelbare elektrische Verlängerungsleitung, mit einem Thermoauslöser zur Unterbrechung des Stroms, wenn aufgrund des durch die Leitung fließenden Stroms ein Temperaturwert im Bereich des Thermoauslösers überschritten wird, und mit einem Überstromauslöser zur Unterbrechung des Stroms, wenn der durch die Leitung fließende Strom eine vorgegebene Abschaltstromstärke überschreitet. Die Erfindung betrifft außerdem eine Steckdoseneinheit mit mindestens einer an einer Gehäusewand befestigten Steckdose und einem derartigen Schutzschalter. Schließlich betrifft die Erfindung eine Kabeltrommel mit einer Steckdoseneinheit und einem derartigen Schutzschalter.

Aus der Deutschen Norm DIN EN 61242 ist eine Kabeltrommel mit einem Schutzschalter für Übertemperatur bzw. Überstrom bekannt. Dort ist eine Kabeltrommel beschrieben, die dort auch als Leitungsroller für den Hausgebrauch bezeichnet wird. Die Kabeltrommel weist dabei mindestens eine an einer Gehäusewand befestigte Steckdose, eine elektrische Leitung zur Stromversorgung der Steckdose über einen an eine entfernte Stromquelle ankoppelbaren Stromanschluss, insbesondere ein Steckendosenstecker, und mit einen Schutzschalter auf. Die Kabeltrommel ist mit einer flexiblen elektrischen Leitung mit einer entsprechenden Zahl von Einzelleitern bestückt, wobei jeder Einzelleiter mit einem Pol im Steckdosenstecker bzw. mit einem Schutzleiterkontakt verbunden ist. Die Kabeltrommel weist beispielsweise ein zylinderförmiges Gehäuse auf, wobei die Leitung um eine Kabelaufwickelrolle aufwickelbar ist. Die Leitung weist an einem Ende den Steckdosenstecker auf und ist mit dem anderen Ende mit den einzelnen Leitern an einer seitlich am Gehäuse angeordneten Steckdoseneinheit mit mindestens einer Steckdose elektrisch leitend verbunden.

Um zu verhindern, dass bei einer zu hohen Stromstärke auf der Leitung oder einem Kurzschluss die Kabeltrommel Feuer fängt oder das verwendete Material teilweise schmilzt, wird ein sogenannter Thermoauslöser verwendet, der den Strom auf der Leitung unterbricht, wenn in dessen Umfeld eine zu hohe Temperatur gemessen wird. Gemäß Norm muss ein derartiger Thermoauslöser eine Freiauslösung besitzen und vom Typ mit nicht selbsttätiger Rücksetzung sein. Der Thermoauslöser muss ohne Öffnung der Abdeckung für die Klemmen zurückstellbar sein, und die Strom-Abschalttemperatur darf durch den Anwender nicht veränderbar sein. Der Thermoauslöser muss mindestens einen Pol eines zweipoligen Leitungsrollers, insbesondere den Phasenpol, trennen oder bei einer mehrpoligen Leitung müssen alle Leitungen außer dem Neutralleiter durch den Thermoauslöser bei Übertemperatur abgeschaltet werden. Es besteht nun das Problem, dass bei vollständig von der Kabeltrommel abgewickelter Leitung und trotz Übertemperatur der Thermoauslöser die Leitung nicht unterbricht, da der im Bereich der Steckdoseneinheit der Kabeltrommel angeordnete Thermoauslöser mit der überhitzten Leitung nicht in Kontakt steht. Aus diesem Grund wird für derartige Kabeltrommeln ein zusätzlicher Überstromauslöser notwendig, der auch bei vollständig abgerollter Leitung bei einem Kurzschluss oder bei zu hohem Strom die Leitung unterbricht. In Bezug auf die Abschaltfähigkeit und die Rücksetzbarkeit des Überstromauslösers werden die gleichen Anforderungen gestellt wie an den Thermoauslöser. Es kann dabei ein herkömmlicher Überstromauslöser oder auch ein FI-Schutzschalter eingesetzt werden, wobei beide technisch aufwendig sind und als zusätzlich erforderliches Bauteil die Kabeltrommel verteuern.

Die EP 0162940 B1 beschreibt einen als Bimetall-Schalter ausgeführten Thermoauslöser. Er dient zum Schutz von elektrischen Verbrauchern gegen Überhitzung und kann für unterschiedliche Elektrogeräte eingesetzt werden. Bei stärkerer Temperaturerhöhung am Überwachungsort wird das Vorliegen einer Überlastung angenommen, und bei Überschreiten einer Strom-Abschalttemperatur werden die Schaltkontakte bzw. die elektrischen Leitungen mittels des Bimetall-Schalters elektrisch getrennt.

Es ist Aufgabe der vorliegenden Erfindung, einen Schutzschalter zur Unterbrechung eines über eine elektrische Leitung fließenden Stroms bereitzustellen, der einerseits als Thermoauslöser zur Abschaltung des Stroms bei Übertemperatur und andererseits als Überstromauslöser zur Abschaltung des Stroms bei nicht zulässiger Stromstärke wirksam ist. Der Schutzschalter soll sowohl als Thermoauslöser als auch als Überstromauslöser wirksam sein und einen einfachen und kostengünstigen Aufbau aufweisen. Es ist ferner Aufgabe der vorliegenden Erfindung, eine Steckdoseneinheit, beispielsweise ein Mehrfachstecker, oder eine Kabeltrommel mit einem derartigen Schutzschalter bereitzustellen.

Die Aufgabe wird in Bezug auf einen Schutzschalter zur Unterbrechung eines über eine elektrische Leitung fließenden Stroms durch die Merkmale des unabhängigen Anspruchs 1 gelöst. Danach ist der Überstromauslöser durch den Thermoauslöser und ein Widerstandselement gebildet, und das Widerstandselement weist einen vorbestimmten Querschnitt und ein spezielles Material auf, so dass bei einer vorgegebenen Abschaltstromstärke eine Strom-Abschalttemperatur am Widerstandselement anliegt. Zusätzlich ist das Widerstandselement nahe beim Thermoauslöser angeordnet, so dass der Thermoauslöser aufgrund der Strom-Abschalttemperatur des Widerstandselements bei der vorgegebenen Abschaltstromstärke den Strom auf der Leitung unterbricht.

Erfindungsgemäß ist erkannt worden, dass ein separater Abschaltmechanismus des Überstromauslösers entfallen kann, wenn der Thermoauslöser unter Verwendung eines speziellen Widerstandselements als Überstromauslöser eingesetzt wird. Bei zulässiger Stromstärke auf der Leitung ist das Widerstandselement lediglich in geringem Maße erhitzt, so dass der Thermoauslöser aufgrund des fehlenden Überstroms zunächst nicht aktiv wird. Wird aufgrund eines Defektes der Kabeltrommel jedoch ein Temperaturwert im Bereich des Thermoauslösers überschritten, so schaltet der Thermoauslöser den Strom auf der Leitung ab, obwohl ein Überstromauslöser eventuell nicht ansprechen würde. Aufgrund des speziell ausgewählten Widerstandselements mit vorbestimmtem Querschnitt und dem speziellen Material arbeitet der Thermoauslöser zusätzlich als Überstromauslöser. Es kann also auf einen teuren zusätzlichen Überstromauslöser oder einen FI-Schutzschalter verzichtet werden. Auf diese Weise können Kosten pro eingesetzter Kabeltrommel oder Steckdoseneinheit eingespart werden. Außerdem entfällt mit dem zusätzlichen Überstromauslöser ein weiteres Bauteil, das die Ausfallwahrscheinlichkeit bzw. Störanfälligkeit derartiger Verbraucher zusätzlich erhöht.

Das Widerstandselement des kombinierten Schutzschalters ist bevorzugt als Leiterbahn oder Draht ausgebildet, die bzw. der am Umfang des oder in Nuten im Thermoauslöser abschnittsweise anliegt. Wenn der Schutzschalter in einer Steckdoseneinheit oder einer Kabeltrommel eingebaut ist, ist dieser zwischen die abzuschaltende Leitung und einen Pol einer Steckdose der Kabeltrommel geschaltet. Anstatt eines Kontaktdrahtes zwischen dem Pol der Steckdose und dem Kontakt des Schutzschalters kann nun ein Widerstandsdraht entsprechend der vorliegenden Erfindung verwendet werden, der zusätzlich um das Gehäuse des Schutzschalters oder in speziell darin vorgesehenen Nuten geführt ist. Auf diese Weise wird die Strom-Abschalttemperatur am Widerstandselement sehr schnell an den Thermoauslöser weitergegeben, so dass dieser aufgrund der zu großen Stromstärke zügig abschaltet. Statt einem Widerstandsdraht kann auch eine speziell ausgeformte Leiterbahn aus einem elektrisch leitenden Material im Bereich des Schutzschalters angeordnet sein, um die Strom-Abschalttemperatur des derart ausgebildeten Widerstandselements an den Thermoauslöser weiterzugeben. Sowohl eine Leiterbahn als auch ein Draht können an der Oberfläche isolierend beschichtet sein oder mit einer Isolierung aus Kunststoff umgeben sein, so dass die Gefahr eines Kurzschlusses im Umfeld des Schutzschalters verringert wird.

Bei einer Ausführungsform des erfindungsgemäßen Schutzschalters ist das Widerstandselement aus einem Metall mit Bronzeanteilen gebildet, um die erforderliche Strom-Abschalttemperatur des Widerstandselements bei der gewünschten Abschaltstromstärke zu erzeugen. Das Metall mit Bronzeanteilen kann eine spezielle Bronzelegierung sein, die ein Widerstandselement mit geeignetem Querschnitt ergibt, um den Thermoauslöser bei der Abschaltstromstärke anzusteuern. Bei der Auswahl des Widerstandselements muss berücksichtigt werden, dass der Thermoauslöser bei einer bestimmten Strom-Abschalttemperatur wirksam wird. Ist nun die gewünschte Abschaltstromstärke bekannt, so kann das Widerstandselement in Bezug auf Querschnitt, Material und Wickellänge in dem Thermoauslöser verändert werden. Um Schutzschalter mit unterschiedlicher Abschaltstromstärke zu erzielen, kann das Widerstandselement bei gleicher Anordnung aus einer unterschiedlichen Metall-Legierung bestehen. Durch den unterschiedlichen Widerstand schaltet dann der Schutzschalter bei unterschiedlichen Abschaltströmen.

Andererseits kann eine unterschiedliche Abschaltstromstärke aber auch über die Länge des Abschnitts verändert werden, mit dem das Widerstandselement am Thermoauslöser anliegt. Ein mehrfach um den Thermoauslöser an seinem Umfang herumgewickeltes Widerstandselement führt zu einer sehr zügigen Auslösung im Vergleich zu einem Widerstandselement, das lediglich im Bereich von einem Zentimeter am Gehäuseumfang des Thermoauslösers anliegt. Ebenso kann mit einem flächigen, mehrfach abgewinkelten Leiterbahn-Widerstandselement eine höhere Abschaltgeschwindigkeit erzielt werden als bei einem im wirksamen Querschnitt kleineren Draht.

Das Widerstandselement ist mit einem Ende an einem elektrischen Anschluss des Thermoauslösers und mit einem anderen Ende an einem Pol der elektrischen Leitung elektrisch leitend verbunden. Auf diese Weise kann als besonderer Vorteil eine Kabeltrommel oder eine Steckdoseneinheit in ihrer herkömmlichen Gestaltung verwendet werden, und der Überstromauslöser entsteht lediglich durch Ersetzen des Anschlussdrahtes des Schutzschalters durch das erfindungsgemäße Widerstandselement. Es ist ein besonderer Vorteil, dass bestehende Kabeltrommeln mit Thermoauslöser nicht umgestaltet, sondern lediglich durch ein mehrfach um den Thermoauslöser herumgewickeltes Widerstandselement ergänzt werden müssen. Auf diese Weise kann aus einem Verbraucher mit Thermoauslöser in einfacher Weise ein zusätzlicher Überstromauslöseeffekt erzeugt werden.

Bevorzugt ist das Widerstandselement bei einer mehrpoligen Leitung parallel oder in Serie zur Phasenpol-Leitung geschaltet. Auf diese Weise ist der Thermoauslöser über das Widerstandselement mit der energietragenden Leitung verbunden, so dass diese bei Überstrom oder Übertemperatur direkt abgeschaltet wird. Es ist dann nicht notwendig, den Null-Leiter oder die Erdung separat abzuschalten.

Der Thermoauslöser kehrt bei einer Weiterbildung der Erfindung nur dann von der Stromunterbrechungsstellung in die Normalstellung zurück, wenn ein zuvor an einer elektrischen Leitung angeschlossener Verbraucher abgeschaltet ist oder in sonstiger Weise vom Strom getrennt wird. Auf diese Weise ist eine Fehlbedienung nicht möglich, da der Anwender beispielsweise durch eine Warnlampe auf die Störung hingewiesen wird und ein Zurücksetzen des Schutzschalters nur möglich ist, wenn der Fehler behoben wurde.

Die Aufgabe der Erfindung wird bezüglich einer Steckdoseneinheit durch die Merkmale des unabhängigen Anspruchs 9 gelöst. Erfindungsgemäß ist eine Steckdoseneinheit mit mindestens einer an einer Gehäusewand befestigten Steckdose, einer elektrischen Leitung zur Stromversorgung der Steckdose über einen an eine entfernte Stromquelle ankoppelbaren Stromanschluss und mit einem Schutzschalter versehen. Die Steckdoseneinheit weist eine Stromversorgungsschiene für einen Pol der elektrischen Leitung auf, der Thermoauslöser ist nahe bei der Stromversorgungsschiene angeordnet, und ein elektrischer Anschluss des Thermoauslösers steht mit der Stromversorgungsschiene in Verbindung. Erfindungsgemäß ist zwischen den elektrischen Anschluss des Thermoauslösers und der Stromversorgungsschiene das Widerstandselement geschaltet, und das Widerstandselement bildet gleichzeitig den Stromversorgungsanschluss für den Thermoauslöser.

Die Steckdoseneinheit ist beispielsweise als Mehrfachstecker ausgeführt, wobei der bereits beschriebene Schutzschalter, der einerseits als Thermoauslöser und andererseits als Überstromauslöser ausgebildet ist, vorteilhaft eingesetzt wird. Durch die Beschaltung des Schutzschalters mit dem Widerstandselement ist der Einsatz eines zusätzlichen, teuren Überstromauslösers nicht erforderlich. Das Widerstandselement erhitzt sich bei Überstrom und schaltet die Steckdosen der Steckdoseneinheit in gefährlichen Situationen ab. Der Schutzschalter arbeitet dabei als Thermoauslöser und über das Widerstandselement als Überstromauslöser.

Bei einer Weiterbildung der Steckdoseneinheit ist der Thermoauslöser an einer Gehäusewand der Steckdoseneinheit befestigt, und das Widerstandselement ist am Umfang des oder in Nuten am Thermoauslöser abschnittsweise anliegend angeordnet. Die Abschaltgeschwindigkeit des Schutzschalters kann entscheidend erhöht werden, wenn das Widerstandselement am Umfang des Thermoauslösers mit großer Fläche angeordnet ist. Dazu kann entweder ein Leiterblech eingesetzt werden, das am Umfang des Thermoauslösers angeordnet ist, oder ein Widerstandsdraht kann mehrfach um den Thermoauslöser herumgeführt sein.

Es können Steckdoseneinheiten mit unterschiedlicher Stromaufnahme mit Schutzschaltern bei unterschiedlicher Abschaltstromstärke versehen werden. Dazu kann jedes Mal derselbe Thermoauslöser zum Einsatz kommen, wobei Widerstandsdrähte aufgrund ihres Materials und Querschnitts die Abschalttemperatur des Thermoauslösers bei unterschiedlichen Stromstärken erreichen. Beispielsweise kann ein Widerstandsdraht aus einer Bronzelegierung bestehen und ein weiterer Widerstandsdraht aus einem anderen Material wie Nickellegierungen, Konstantan oder Kupferlegierungen.

Die Aufgabe der Erfindung wird auch durch die Merkmale des unabhängigen Anspruchs 11 gelöst. Dabei wird der beschriebene Schutzschalter bei einer Kabeltrommel eingesetzt. Die Kabeltrommel weist mindestens eine an einer Gehäusewand befestigte Steckdose und eine elektrische Leitung zur Stromversorgung dieser Steckdose über einen an einer entfernten Stromquelle ankoppelbaren Stromanschluss-Stecker auf. Der erfindungsgemäße Schutzschalter unterbricht den über die elektrische Leitung fließenden Strom, wenn aufgrund des durch die Leitung fließenden Stroms ein Temperaturwert im Bereich des Thermoauslösers überschritten wird, und der Schutzschalter unterbricht den Strom, wenn der durch die Leitung fließende Strom eine vorgegebene Abschaltstromstärke überschreitet. Erfindungsgemäß ist der Überstromauslöser durch den Thermoauslöser mit einem Widerstandselement gebildet, wobei das Widerstandselement einen vorbestimmten Querschnitt und ein spezielles Material aufweist. Das Material oder der Querschnitt des Widerstandselements wird dabei so ausgewählt, dass bei einer vorgegebenen Abschaltstromstärke eine Strom-Abschalttemperatur am Widerstandselement anliegt. Das Widerstandselement ist in der Nähe des Thermoauslösers angeordnet, so dass dieser aufgrund der Strom-Abschalttemperatur des Widerstandselements erhitzt wird und bei der vorgegebenen Abschaltstromstärke den Strom auf der Leitung unterbricht.

Weitere Ausführungsformen und Vorteile ergeben sich aus der folgenden Beschreibung der Erfindung anhand der Zeichnungen. Es zeigen in schematischer Darstellung:
- Figur 1: eine perspektivische Ansicht einer Steckdoseneinheit einer Kabeltrommel mit einem Schutzschalter gemäß vorliegender Erfindung,
- Figur 2: eine schematische Darstellung der Beschaltung der Steckdoseneinheit mit einem Thermoauslöser und Widerstandselement gemäß der vorliegenden Erfindung,
- Figur 3: eine Draufsicht von hinten auf die Steckdoseneinheit gemäß Figur 1 und
- Figur 4: eine Seitenansicht der Steckdoseneinheit aus Figur 1.

Die Steckdoseneinheit 1 weist eine Gehäusewand 2 mit vier Steckdosen 3 bis 6 auf. Die Steckdoseneinheit 1 ist Bestandteil einer nicht dargestellten Kabeltrommel und wird mit dieser durch Verschraubung verbunden. Die Steckdosen 3 bis 6 werden dann elektrisch leitend mit den einzelnen Leitungen einer elektrischen Leitung 19 zur Stromversorgung der Steckdosen verbunden, wobei am andern Ende der elektrischen Leitung 19 ein Stromanschluss-Stecker 20 angeordnet ist, um die Steckdosen 3 bis 6 mit Strom zu versorgen.

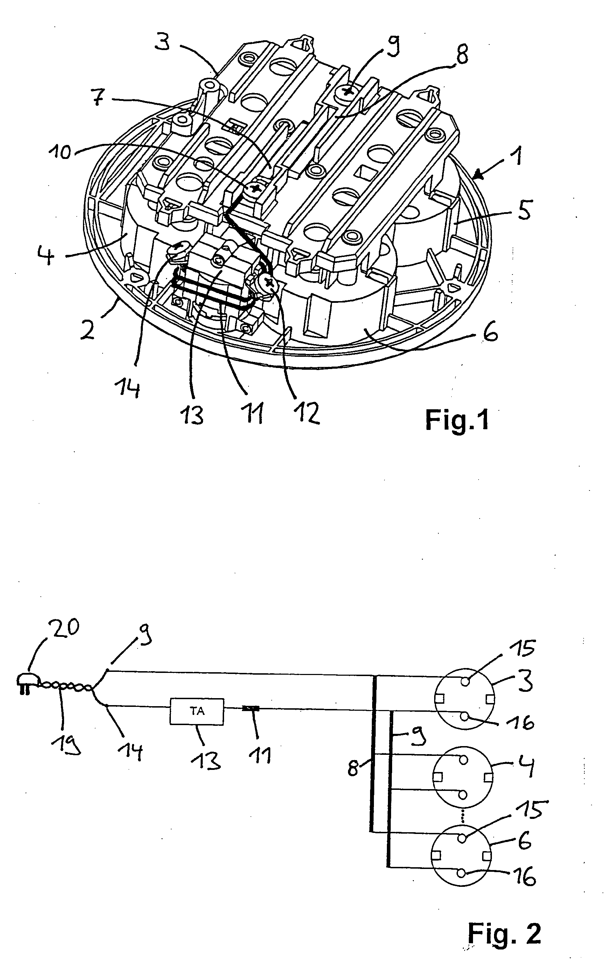

Die Steckdoseneinheit 1 weist eine Stromschiene 7 auf, die mit den Phasenpol-Buchsen jeder Steckdose 3 bis 6 elektrisch leitend verbunden ist. Ferner weist die Steckdoseneinheit eine Stromschiene 8 auf, die mit dem Nullungspol jeder Steckdose 3 bis 6 elektrisch leitend verbunden ist. Über eine Klemme 9 kann der Null-Leiter der elektrischen Leitung 19 angeschlossen werden. An einer Klemme 10 ist ein Widerstandselement 11 angeklemmt, dessen anderes Ende an einer Klemme 12 eines Thermoauslösers 13 festgeklemmt ist. Der Thermoauslöser 13 weist eine zusätzliche Klemme 14 zu dessen elektrischer Stromversorgung auf. In Figur 2 zeigt das Schaltbild, dass die Nullungspol-Buchse 15 jeder Steckdose 3, 4, 5, 6 über die Stromschiene 8 mit der Klemme 9 elektrisch leitend verbunden ist. Jede Phasenpol-Buchse 16 der Steckdosen 3, 4, 5 und 6 ist über die Stromschiene 9, das Widerstandselement 11 und den Thermoauslöser 13 mit der Klemme 14 elektrisch leitend verbunden. Sobald der Thermoauslöser 13 aufgrund einer Übertemperatur die elektrische Leitung 19 unterbricht, ist die Stromschiene 9 mit den daran angeschlossenen Phasenpol-Buchsen 16 der Steckdosen 3 bis 6 nicht mehr mit Strom versorgt. Erst nach dem Rücksetzen des Thermoauslösers 13 ist der Stromkreis wieder geschlossen, so dass die Steckdosen 3 bis 6 wieder mit Strom versorgt sind.

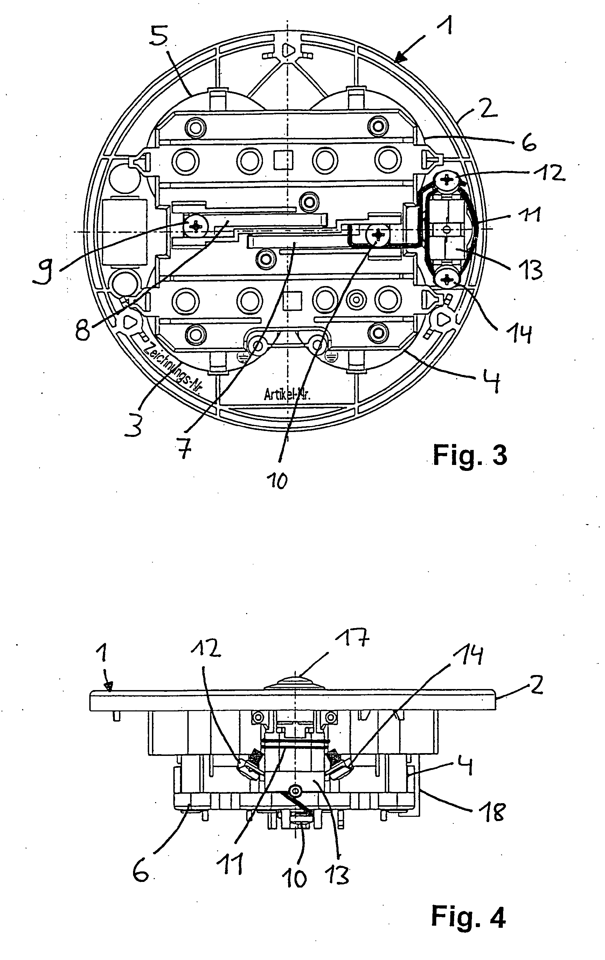

Wie in der Figur 3 sichtbar ist, ist das Widerstandselement 11 am Umfang des Thermoauslösers 13 zweimal herumgeführt, so dass bei einer Temperaturentwicklung am Widerstandselement 11 die Temperatur auf den Thermoauslöser 13 übertragen wird. Diese Temperaturentwicklung führt beim Erreichen einer Strom-Abschalttemperatur zum Auslösen des Thermoauslösers, wodurch der Stromkreis aufgetrennt wird und die Steckdosen 3 bis 6 ohne Strom sind. Eine Warnlampe 17 ist vorgesehen, die entweder die Wirksamkeit des Thermoauslösers 13 anzeigt oder dann leuchtet, wenn die Steckdosen 3 bis 6 Strom führen. In der Figur 4 ist schließlich noch der Schutzkontakt 18 der Steckdose 4 dargestellt, der ebenfalls über eine nicht gezeigte Sammelschiene mit den Schutzkontakten der anderen Steckdosen 3, 5, 6 elektrisch leitend verbunden ist, um mit dem Schutzkontakt-Leiter der elektrischen Leitung 19 der Kabeltrommel verbunden zu werden.

Die in den Figuren dargestellte Steckdoseneinheit 1 wird in eine Ausnehmung einer Kabeltrommel eingebaut, und die Stromschienen 7, 8 werden über die Klemmen 9, 14 mit den Leitern der elektrischen Leitung 19 verbunden, die als Verlängerungskabel ausgebildet ist und sich über einen Aufwickelmechanismus auf der Kabeltrommel aufrollen lässt.

Der Thermoauslöser 13 hat erfindungsgemäß zwei Funktionen. Wird die Kabeltrommel heiß, so löst der Thermoauslöser 13 aufgrund der Übertemperatur aus und öffnet dadurch den Phasenpol-Leiter, so dass die Steckdosen ohne Stromversorgung sind. Üblicherweise ist der Thermoauslöser 13 als Bimetall-Schalter ausgeführt, der durch den Benutzer von Hand wieder zurückgesetzt werden muss, wenn der Thermoauslöser 13 einmal ausgelöst hat. Die zweite Funktion des Thermoauslösers 13 besteht darin, dass er im Zusammenhang mit dem Widerstandselement 11 als Überstromauslöser arbeitet. Das Widerstandselement 11 ist aufgrund seiner Dimensionierung'und seines Materials derart gewählt, dass bei einer vorgewählten Abschaltstromstärke am Widerstandselement 11 eine Strom-Abschalttemperatur anliegt. Diese Stromabschalttemperatur ist so gewählt, dass der Thermoauslöser 13 bei dieser Abschalttemperatur auslöst. Infolgedessen wirkt der Thermoauslöser 13 zusätzlich als Überstromauslöser, der bei geeigneter Dimensionierung des Widerstandselements 11 bei einer bestimmten Stromstärke auslöst. Auf diese Weise kann eine Kabeltrommel ohne große Veränderung neben dem schon vorhandenen Thermoauslöser 13 mit einem Überstromauslöser ausgestattet werden. Das Widerstandselement 11 könnte auch als einfach oder mehrfach abgewinkeltes Widerstandsblech ausgebildet sein, das z. B. in Nuten am Umfang des Thermoauslösers 13 geführt ist. Weiterhin kann das als Draht ausgebildete Widerstandselement 10 die Klemmen 10 und 12 verbinden, ohne um den Thermoauslöser 13 herumgeschlungen zu sein. Die Erwärmung desselben auf Grund des Stromflusses erfolgt dann praktisch ausschließlich durch Wärmeleitung über die Klemme 12.

## Patentansprüche

1. Schutzschalter zur Unterbrechung eines über eine elektrische Leitung (19) fließenden Stroms, insbesondere bei einer Kabeltrommel für eine aufwickelbare elektrische Verlängerungsleitung, mit einem Thermoauslöser (13) zur Unterbrechung des Stroms, wenn aufgrund des durch die Leitung (19) fließenden Stroms ein Temperaturwert im Bereich des Thermoauslösers (13) überschritten wird, und mit einem Überstromäuslöser zur Unterbrechung des Stroms, wenn der durch die Leitung (19) fließende Strom eine vorgegebene Abschaltstromstärke überschreitet, **dadurch gekennzeichnet, dass** der Überstromauslöser durch den Thermoauslöser (13) und ein Widerstandselement (11) gebildet ist, und das Widerstandselement (11) einen vorbestimmten Querschnitt und ein Material aufweist, um bei einer vorgegebenen Abschaltstromstärke eine Strom-Abschalttemperatur am Widerstandselement (11) zu erzeugen, und dass das Widerstandselement (11) derart am Thermoauslöser (13) angeordnet ist, dieser aufgrund der Strom-Abschalttemperatur des Widerstandselements (11) bei der vorgegebenen Abschaltstromstärke den Strom auf der Leitung (19) unterbricht.

2. Schutzschalter nach Anspruch 11, **dadurch gekennzeichnet, dass** das Widerstandselement (11) als Leiterbahn oder Draht ausgebildet ist, der am Umfang des oder in Nuten im Thermoauslöser (13) abschnittsweise anliegt.

3. Schutzschalter nach Anspruch 1 oder 2, **dadurch gekennzeichnet, dass** das Widerstandselement (11) als Widerstandsdraht ausgeführt ist und mehrfach um den Umfang des Thermoauslösers (13) herumgeführt ist.

4. Schutzschalter nach einem der vorhergehenden Ansprüche, **dadurch gekennzeichnet, dass** das Widerstandselement (11) an seiner Oberfläche elektrisch isoliert ist.

5. Schutzschalter nach einem der vorhergehenden Ansprüche, **dadurch gekennzeichnet, dass** das Widerstandselement (11) aus einem Metall mit Bronzeanteilen besteht, um die erforderliche Strom-Abschalttemperatur des Widerstandselements (11) zu erzeugen.

6. Schutzschalter nach einem der vorhergehenden Ansprüche, **dadurch gekennzeichnet, dass** das Widerstandselement (11) mit einem Ende an einem elektrischen Anschluss (12) des Thermoauslösers (13) und mit einem anderen Ende an einem Pol (10) der elektrischen Leitung (19) elektrisch leitend verbunden ist.

7. Schutzschalter nach einem der vorhergehenden Ansprüche, **dadurch gekennzeichnet, dass** das Widerstandselement (11) bei einer mehrpoligen Leitung (19) parallel oder in Serie zur Phasenpol-Leitung (16) geschaltet ist.

8. Schutzschalter nach einem der vorhergehenden Ansprüche, **dadurch gekennzeichnet, dass** der Thermoauslöser (13) nur dann von der Stromunterbrechungsstellung in die Normalstellung zurückkehrt, wenn ein zuvor an der elektrischen Leitung (19) angeschlossener Verbraucher abgeschaltet oder in sonstiger Weise vom Strom getrennt wird.

9. Steckdoseneinheit mit mindestens einer an einer Gehäusewand (2) befestigten Steckdose (3-6), einer elektrischen Leitung (19) zur Stromversorgung der Steckdosen (3-6) über einen an eine entfernte Stromquelle ankoppelbaren Stromanschluss (20) und mit einem Schutzschalter (13) nach einem der vorhergehenden Ansprüche, wobei die Steckdoseneinheit (3-6) eine Stromversorgungsschiene (7, 8) für einen Pol der elektrischen Leitung (19) aufweist, der Thermoauslöser (13) nahe bei der Stromversorgungsschiene (7, 8) angeordnet ist und ein elektrischer Anschluss (12) des Thermoauslösers (13) mit der Stromversorgungsschiene (7) in Verbindung steht, **dadurch gekennzeichnet, dass** zwischen den elektrischen Anschluss (12) des Thermoauslösers (13) und der Stromversorgungsschiene (7) das Widerstandselement (11) geschaltet ist und dass das Widerstandselement (11) gleichzeitig den Stromversorgungsanschluss für den Thermoauslöser (13) bildet.

10. Steckdoseneinheit nach Anspruch 9, **dadurch gekennzeichnet, dass** der Thermoauslöser (13) an der Gehäusewand (2) befestigt ist und das Widerstandselement (11) am Umfang des oder in Nuten am Thermoauslöser (13) abschnittsweise anliegt.

11. Kabeltrommel mit mindestens einer an einer Gehäusewand (2) befestigten Steckdose (3-6), einer elektrischen Leitung (19) zur Stromversorgung der Steckdosen (3-6) über einen an eine entfernte Stromquelle ankoppelbaren Stromanschluss (20) und mit einem Schutzschalter (13) nach einem der Ansprüche 1 bis 8 zur Unterbrechung eines über eine elektrische Leitung (19) fließenden Stroms, wobei ein Thermoauslöser (13) den Strom unterbricht, wenn aufgrund des durch die Leitung (19) fließenden Stroms ein Temperaturwert im Bereich des Thermoauslösers (13) überschritten wird, und wobei ein Überstromauslöser den Strom unterbricht, wenn der durch die Leitung (19) fließende Strom eine vorgegebene Abschaltstromstärke überschreitet, **dadurch gekennzeichnet, dass** der Überstromauslöser ein Widerstandselement (11) mit einem vorbestimmten Querschnitt und aus einem Material aufweist, um bei einer vorgegebenen Abschaltstromstärke eine Strom-Abschalttemperatur am Widerstandselement (11) zu erzeugen, und dass das Widerstandselement (11) derart am Thermoauslöser (13) angeordnet ist, dass dieser aufgrund der Strom-Abschalttemperatur des Widerstandselements (11) bei der vorgegebenen Abschaltstromstärke den Strom auf der Leitung (19) unterbricht.
